Europäisches Patentamt

European Patent Office

Office européen des brevets

(11) Numéro de publication: **0 162 152**
**B1**

(12) **FASCICULE DE BREVET EUROPEEN**

(45) Date de publication du fascicule du brevet: **20.07.88**

(21) Numéro de dépôt: **84200740.3**

(22) Date de dépôt: **22.05.84**

(51) Int. Cl.⁴: **B 21 B 37/06,** G 01 L 5/04

(54) **Appareil de commande utilisant une mesure de la force de traction dans une boucle entre deux cages consécutives d'un train à bandes à chaud.**

(43) Date de publication de la demande:
**27.11.85 Bulletin 85/48**

(45) Mention de la délivrance du brevet:
**20.07.88 Bulletin 88/29**

(84) Etats contractants désignés:
**AT BE DE FR GB IT LU NL**

(56) Documents cités:
**FR-A-1 552 699**
**FR-A-2 359 394**
**GB-A- 948 360**

(73) Titulaire: **ACEC, Société Anonyme**
**Avenue Lloyd George 7**
**B-1050 Bruxelles (BE)**

(72) Inventeur: **Maffei, Mario**
**25 rue des Sarts**
**B - 6270 Loverval (BE)**

(74) Mandataire: **Bossard, Franz et al**
**ACEC - Service des Brevets Boîte Postale 4**
**B-6000 Charleroi (BE)**

EP 0 162 152 B1

Courier Press, Leamington Spa, England.

## Description

Dans la technique de laminage à chaud, il est connu de commander au moyen d'un appareil de commande la valeur de la flèche d'une boucle entre deux cages consécutives d'un train à bandes. Un tel appareil est constitué par exemple par un levier tournant autour d'un axe et supportant à son extrémité libre un rouleau refroidi à l'eau. Ce rouleau tend une boucle d'une bande en cours de laminage grâce à un moteur électrique ou pneumatique engendrant un couple autour de l'axe du levier supportant le rouleau. L'appareil connu fournit un signal de mesure, fonction de la flèche de la boucle. Ce signal de mesure est utilisé pour commander la vitesse soit de la ou des cages amont, soit de la ou des cages aval, soit des deux pour maintenir constante ou variable suivant un programme prédéterminé la valeur de la flèche de la boucle.

Un tel appareil de commande de la flèche d'une boucle de bande en cours de laminage à chaud introduit dans cette dernière une tension ou un effort de traction qui est non seulement fonction de la valeur de la flèche de la boucle et du couple engendré par le dispositif moteur actionnant le levier, mais aussi de la masse ou inertie des éléments mécaniques mobiles de l'appareil ou des cages du train à bandes.

Si lors du laminage à chaud d'une bande de tôle mince, on désire réduire à un minimum et à une valeur constante dans le temps l'effort de traction dans la bande chaude, le couple engendré par le dispositif moteur actionnant le levier ne peut pas être choisi trop faible. En effet, si ce couple est trop faible, le levier n'est pas capable de suivre les variations de la flèche de la boucle au rythme de la vitesse de ces variations. D'autre part, si le couple du dispositif moteur actionnant le levier reste relativement élevé, les variations de la fléche de la boucle s'accompagnent de variations nuisibles de l'effort de traction dans la bande chaude, ce qui se traduit par des irrégularités intolérables de la largeur de la tôle finie.

L'invention a pour but principal de remèdier aux inconvénients ci-dessus en permettant de mesurer avec précision la tension dans la bande chaude en cours de laminage et de maintenir constante cette tension à une valeur très faible. Elle a en outre pour but accessoire d'améliorer le fonctionnement du train à bandes en début et fin du laminage de la bande et d'éviter ou de diminuer des inconvénients tels que le battement de la queue de la bande et l'absence de contrôle de la traction dans les phases d'engagement et de dégagement des cages par la bande.

Dans la demande de brevet français FR—A—2 359 394 est déjà décrit un dispositif de mesure de la planéité de bandes métalliques soumises à un effort de traction pendant le laminage. Ce dispositif comprend des sondes de mesure de force disposées entre l'extrémité libre d'un tendeur et les roulements de rouleaux supportés par le dit tendeur. L'invention se rapporte à un appareil de commande d'un train à bandes utilisant une mesure de la force de traction dans une boucle d'une bande entre deux cages de laminage consécutives du train à bandes, l'appareil étant équipé de dispositifs de mesure de force disposés entre l'extrémité libre d'un tendeur de bande et les roulements d'un rouleau supporté par le dit tendeur.

L'appareil suivant l'invention est caractérisé en ce que chaque palier du rouleau comprend deux parties, une partie extérieure au rouleau, solidaire de l'extrémité libre du tendeur, et une partie intérieure au rouleau, et en ce que le dispositif de mesure de force est fixé d'une part dans la partie extérieure au rouleau, et d'autre part dans la partie immobile du roulement intérieur au rouleau, et constitue le seul élément de liaison mécanique entre les dites parties extérieure et intérieure du palier.

L'invention est expliquée ci-dessous par rapport à un exemple d'exécution en se référant au dessin annexé. Dans ce dessin, les figures 1 et 2 représentent respectivement une vue de côté et une vue en coupe partielle agrandie d'un levier équipé à son extrémité libre d'un rouleau refroidi à l'eau. Les figures 3 et 4 représentent des schémes de principe d'appareils de commande.

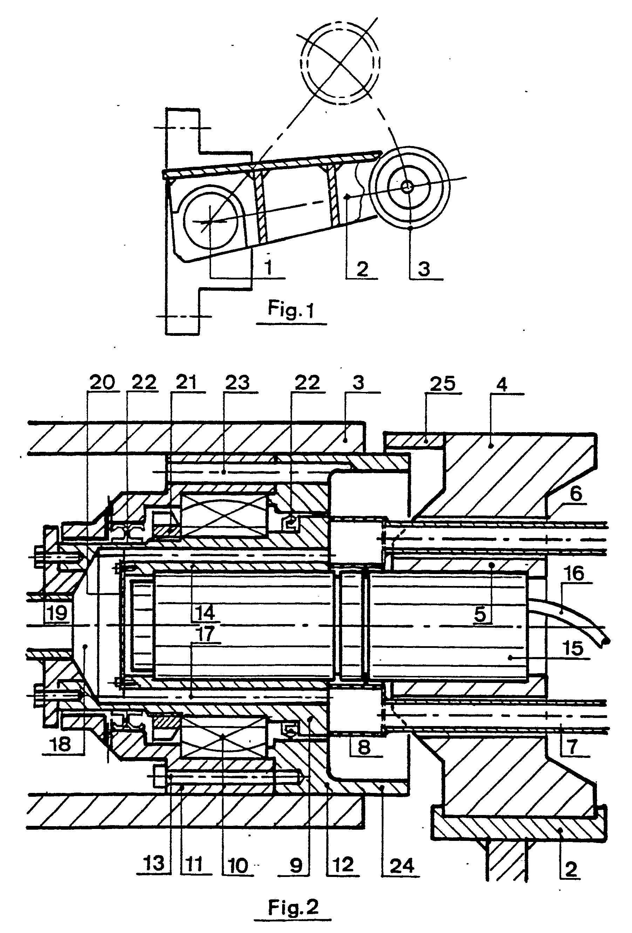

A la figure 1, un levier est composé d'un axe 1 et d'une structure entretoisée 2 portant à son extrémité deux paliers pour un rouleau 3. Les deux paliers se font face et sont identiques l'un par rapport à l'autre. La structure entretoisée 2 est mobile autour de l'axe I grâce à un moteur couple, non représenté. Le couple engendré par ce moteur peut être produit soit par voie électromagnétique, soit par voie pneumatique.

La figure 2 représente une coupe à travers d'une des extrémités du rouleau 3 et montre la constitution d'un des paliers du rouleau. Le palier est composé par une partie extérieure solidarisée avec la structure entretoisée 2 représentée à la figure 1 et par une partie intérieure logée dans l'extrémité du rouleau 3.

La partie extérieure du palier comprend un socle 4 muni d'un alésage central 5. Le socle 4 est fixé à la structure entretoisée 2, représentée à la figure 1, par exemple par vis. L'alésage central 5 est disposé dans l'axe du rouleau 3. Autour de l'alésage central 5, plusieurs trous 6 parallèles à l'alésage 5 sont pratiqués dans le socle 4. A travers ces trous 6 passent, avec un jeu important, des tuyaux d'alimentation 7 en eau de refroidissement. Ces derniers aboutissent dans une chambre annulaire 8 de répartition fixée à une bague fixe 9 de la partie intérieure du palier.

La partie intérieure du palier est composée de la bague fixe 9, d'un roulement 10 supporté par la bague 9 et une bague mobile comprenant deux parties 11 et 12 réunies par vis 13, solidaire d'un côté de l'anneau mobile du roulement 10 et fixé de l'autre côté au rouleau 3.

La bague fixe 9 comprend un alésage central 14 disposé dans l'axe du rouleau et dans le prolongement de l'alésage central 5 du socle 4 de la partie extérieure du palier.

Un capteur de foce cylindrique 15 est enchâssé par une de ses extrémités actives dans l'alésage 5 et par l'autre extrémité dans l'alésage 14, tandis qu'une partie médiane reste à portée libre. Ce capteur 15 constitue la seule liaison mécanique entre la partie extérieure et intérieure du palier. Un câble de raccordement 16 permet la connection du capteur de force 15 à un circuit de commande, non représenté, de l'appareil.

La bague fixe 9 est percée de plusieurs canaux 17 qui relient la chambre annulaire de répartition 8 à une chambre colletrice 18. De cette dernière part un tuyau d'arrivée d'eau froide 19 disposé dans l'axe du rouleau 3. Entre l'alésage 14 et la chambre 18, une paroi de séparation 20 peut être prévue, bien que ce ne soit pas indispensable si le capteur est enchâssé de manière étanche dans l'alésage 14.

Le roulement 10 est fixé sur la bague 9 au moyen d'un écrou 21 et est protégé de l'eau de refroidissement par des joints 22. L'eau qui s'est echauffée au contact avec les parois du rouleau 3 est évacuée à travers des canaux 23 percés dans les bagues mobiles 11 et 12.

Des dispositions pour empêcher le dépôt de saletés à la sortie des canaux 23 peuvent être prévus; par exemple un machon de prolongement 24 de la bague 11 et un écran protecteur semi-cylindrique 25 recouvrant le manchon de prolongement 24.

L'invention est utilisable pour commander le comportement des tendeurs de boucles tels que décrit aux figures 1 et 2 à n'importe quel endroit du train à bandes. Elle est particulièrement utile entre les deux ou trois dernières cages où la tôle chaude est déjà mince.

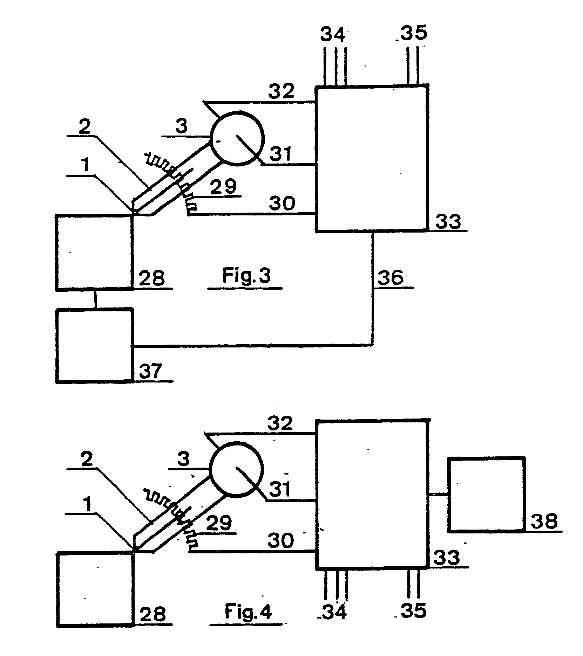

Un moteur couple 28 (figure 3) actionnant le levier 1, 2, 3 permet de tendre la boucle entre deux cages consécutives du train à bandes. Un dispositif de mesure 29 approprié envoie sur une liaison 30 un signal de mesure de l'angle d'inclinaison du levier 2. Les capteurs de mesure de force 15 (figure 2) dans chacun des paliers du rouleau 3 envoient deux signaux de mesure de force sur des liaisons 31 et 32. Les liaisons 30 à 32 sont raccordées à des entrées d'un calculateur 33. Ce dernier reçoit en outre, par des conducteurs 34, des consignes et/ou mesures de largeur et d'épaisseur de la bande en cours de laminage ainsi qu'une consigne ou mesure de la dureté. En outre, au moyen de conducteurs 35, des signaux tels qu'un signal de détection de début de bande ou un signal de détection de fin de bande sont amenés à l'entrée du calculateur 33. Ce dernier calcule l'effort de traction dans la bande en tenant compte de la flèche de la boucle, du couple du moteur 28, des inerties des éléments en mouvement dont les valeurs sont introduites par des consignes et élabore ensuite un signal de commande de couple qu'il envoie sur une liaison 36 vers une alimentation de puissance 37 du moteur couple 28.

Il est possible aussi de laisser le tendeur de boucle en position fixe et de commander un régulateur de la vitesse d'une cage 38 ou de plusieurs cages amont au moyen d'un signal de commande élaboré par le calculateur 33 (figure 4). Il est concevable également de combiner une commande de vitesse de cages avec une commande de tendeur du boucle.

Les signaux de début et de fin de bande peuvent être utilisés pour modifier, grâce à la connaissance de la tension dans la bande, certaines consignes dans la commande, afin de supprimer des comportements néfastes d'éléments du train à bandes dans les périodes de début et de fin du laminage.

En régime, le calculateur permet l'élaboration d'un signal de commande qui tient compte des corrections compensant des ereurs de linéarité et peut engendrer, en fonction des disparités de force dans les paliers du rouleau, des signaux de correction appliqués à d'autres appareils de commande ou de réglage du laminoir.

En commandant un tendeur de boucle au moyen de l'appareil suivant la figure 3, une tension très faible dans la bande en cours de laminage n'entraîne pas les inconvénients connus. En effet, lorsque la tension dans la bande relâche, le couple fourni par le moteur 28 est augmenté, provoquant une réaction très rapide du levier. Cependant, dès que la tension mesurée de la bande s'approche à nouveau de la consigne, le couple du moteur 28 diminue à une valeur très faible. Grâce au fait que la force mesurée est réduite au minimum, c'est-à-dire le poids du rouleau qui est une constante plus l'effort exercé par le rouleau sur la bande, la précision de la mesure de l'effort sur la bande est très grande.

## Revendications

1. Appareil de commande d'un train à bandes utilisant une mesure de la force de traction dans une boucle d'une bande entre deux cages de laminage consécutives du train à bandes, appareil équipé de dispositifs de mesure de force (15) disposés entre l'extrémité libre d'un tendeur de bande (1,2) et les roulements (10) d'un rouleau (3) supporté par le dit tendeur, caractérisé en ce que chaque palier du rouleau (3) comprend deux parties, une partie (4) extérieure au rouleau, solidaire de l'extrémité libre du tendeur (2), et une partie intérieure (9,10,11,12) au rouleau, et en ce que le dispositif de mesure de force (15) est fixé d'une part dans la partie extérieure (4) au rouleau (3), et d'autre part dans la partie immobile (9) du roulement (10) intérieur au rouleau (3) et constitue le seul élément de liaison mécanique entre les dites parties extérieure et intérieure du palier.

2. Appareil suivant la revendication 1, caractérisé en ce que chaque dispositif de mesure de force (15) est de forme cylindrique et enchâssé dans des alésasges (5,14) prévus dans la dite partie extérieure (4) d'une part et la dite partie intérieure (9) d'autre part d'un palier.

3. Appareil suivant une des revendications précédentes, caractérisé en ce que les dispositifs de mesure de force (15) fournissent des signaux qui sont introduits dans un calculateur (33) élaborant un signal de commande de couple pour un moteur (28) actionnant le tendeur de boucle (1,2,3).

4. Appareil suivant une des revendications précédentes, caractérisé en ce que les dispositifs de mesure de force (15) fournissent des signaux qui sont introduits dans un calculateur (33) élaborant un signal ou des signaux de commande de la vitesse du ou des moteurs (38) de la ou des cages amont et/ou aval par rapport au tendeur de boucle (1,2,3).

**Patentansprüche**

1. Vorrichtung zur Steuerung einer Band-Walzstraße, bei der eine Messung der Zugkraft in einer Schleife eines Bandes zwischen zwei aufeinanderfolgenden Walzständern der Walzstraße benutzt wird, wobei die Vorrichtung mit Kraftmeßeinrichtungen (15) ausgerüstet ist, die zwischen dem freien Ende einer Band-Spannvorrichtung (1,2) und den Wälzlagern (10) einer von der besagten Spannvorrichtung getragenen Rolle (3) angeordnet sind, dadurch gekennzeichnet, daß jedes Lager der Rolle (3) aus zwei Teilen besteht, und zwar einem außerhalb der Rolle gelegenen, mit dem freien Ende der Spannvorrichtung (2) fest verbunden Teil (4), und einem innerhalb der Rolle gelegenen Teil (9,10,11,12), und daß die Kraftmeßeinrichtung (15) einerseits an dem außerhalb der Rolle (3) gelegenen Teil (4), und andererseits an dem innerhalb der Rolle (3) gelegenen, unbeweglichen Teil (9) des Wälzlagers (10) befestigt ist und das einzige mechanische Verbindungselement zwischen dem besagten äußeren und inneren Teil des Lagers bildet.

2. Vorrichtung gemäß Anspruch 1, dadurch gekennzeichnet, daß jede Kraftmeßeinrichtung (15) eine zylindrische Form aufweist und in Bohrungen (5,14) eingelassen ist, die einerseits in dem besagten äußeren Teil (4), und andererseits in dem besagten inneren Teil (9) eines Lagers vorgesehen sind.

3. Vorrichtung gemäß einem der vorhergehenden Ansprüche, dadurch gekennzeichnet, daß die Kraftmeßeinrichtungen (15) Signale leifern, die in einen Rechner (33) gegeben werden, der ein Drehmoment-Steuersignal für einen Motor (28) erzeugt, der die Schleifen-Spannvorrichtung (1,2,3) betätigt.

4. Vorrichtung gemäß einem der vorhergehenden Ansprüche, dadurch gekennzeichnet, daß die Kraftmeßeinrichtungen (15) Signale liefern, die in einen Rechner (33) gegeben werden, der ein Steuersignal oder Steuersignale für die Geschwindigkeit des Motors oder der Motoren (38) des Walzständers oder der Walzständer vor und/oder nach der Schleifen-Spannvorrichtung (1,2,3) erzeugt.

**Claims**

1. Control apparatus for a strip mill using measurement of the tractive force in a loop of a strip between two consecutive roll stands of the strip mill, this apparatus being equipped with force measuring means (15) arranged between the free end of a strip tensioning device (1, 2) and the rolling contact bearing elements (10) of a roller (3) which is supported by the said tensioning device, characterised in that each bearing of the roller (3) comprises two parts, a part (4) situated externally of the roller and integral with the free end of the tensioning device (2), and a part (9, 10, 11, 12) situated internally of the roller, and in that the force measuring means (15) is fixed on the one hand in the part (4) situated externally of the roller (3) and on the other hand in the stationary part (9) of the rolling contact bearing element system (10) situated internally of the roller (3) and constitutes the sole mechanical connection element between the said external and internal parts of the bearing.

2. Apparatus according to claim 1, characterised in that each force measuring means (15) is of cylindrical shape and is mounted in bores (5, 14) provided in the said external part (4) on the one hand and the said internal part (9) on the other hand of the bearing.

3. Apparatus according to one of the preceding claims, characterised in that the force measuring means (15) deliver signals which are introduced into a computer (33) producing a torque control signal for a motor (28) actuating the loop tensioning device (1, 2, 3).

4. Apparatus according to one of the preceding claims, characterised in that the force measuring means (15) deliver signals which are introduced into a computer (33) producing a control signal or signals for the speed of the motor or motors (38) of the stands which are upstream and/or downstream relatively to the loop tensioning device (1, 2, 3).

Fig. 1

Fig. 2

Fig.3

Fig.4